# EUROPEAN PATENT APPLICATION

(11) **EP 4 279 772 A1**
(43) Date of publication of application: **22.11.2023**
(21) Application number: 22461553.4
(22) Date of filing: 20.05.2022
(51) Int. Cl.: F16K 11/00, F16K 21/06, F16K 47/00, F16D 57/00

(54) **SPEED REGULATION MECHANISM**

(71) Applicant: UTC Aerospace Systems Wroclaw Sp. z o.o., 51-317 Wroclaw (PL)
(72) Inventor: ZAJAC, Piotr Józef, 51-317 Wroclaw (PL); CHWIOLKA, Natalia, 51-317 Wroclaw (PL)
(74) Representative: Dehns

(57) **Abstract**

A speed regulation mechanism (5) suitable for use with a bi-directional actuator (3) is disclosed. The mechanism includes an actuation element (12) and a regulator (14). The actuation element is configured to reversibly move between a first position and a second position. The regulator (14) is configured to rotate around a regulator axis (A), and the actuation element (12) is coupled to the regulator (14). Movement of the actuation element in a first direction towards the second position causes rotation of the regulator around the regulator axis (A) in a first rotational direction, and movement of the actuation element in a second direction towards the first position causes rotation of the regulator around the regulator axis (A) in a second rotational direction. The regulator (14) is so configured that it has a first resistance to rotation when rotating in the first rotational direction and a second resistance to rotation when rotating in the second rotational direction; and the second resistance to rotation is greater than the first resistance to rotation.

## Description

This disclosure relates to a speed regulation mechanism and in particular to a speed regulation mechanism having a regulator.

Speed regulation mechanisms are used in a wide variety of applications to control the speed at which a reversible actuation system returns to its original configuration after the actuation system has been at least partially actuated. One such reversible actuation system is a non-concussive faucet. Faucets are commonly also referred to as taps, and non-concussive faucets are commonly also referred to as self closing faucets or self closing taps. Typically, these types of faucets or taps comprise a valve that is biased into or rests in a closed configuration, in which liquid may not pass through the valve, an actuator that can be actuated to cause the valve to reconfigure into a fully open configuration in which the valve offers a minimum impedance to the flow of liquid through the valve and maximum rate of flow of liquid through the valve, and a means for controlling how quickly the valve returns to the closed configuration after the valve has been reconfigured into an open configuration.

According to a first aspect of the present disclosure there is provided an improved speed regulation mechanism. The speed regulation mechanism is suitable for use with a bi-directional actuator, the mechanism comprising an actuation element and a regulator. The actuation element is configured to reversibly move between a first position and a second position, and is coupled to the regulator. The regulator is configured to rotate around a regulator axis. Movement of the actuation element in a first direction towards the second position causes rotation of the regulator around the regulator axis in a first rotational direction and movement of the actuation element in a second direction towards the first position causes rotation of the regulator around the regulator axis in a second rotational direction. The regulator is so configured that the regulator has a first resistance to rotation when rotating in the first rotational direction and a second resistance to rotation when rotating in the second rotational direction. The second resistance to rotation is greater than the first resistance to rotation.

In an embodiment of the above embodiment, the first and/or second resistance may be referred to as drag, hydrodynamic drag or aerodynamic drag dependent on the fluid which is interacting with the regulator so as to produce the first and second resistances to rotation.

The speed regulation mechanism of the present disclosure is advantageous relative to known mechanisms because it is simpler both in design and construction and may be lighter than the known mechanisms. Further, the mechanism of the present disclosure can be used in a wide variety of different applications, including systems where space is limited. The weight and size of the speed regulation mechanism of the present disclosure are of particular importance if the mechanism is to be used as part of an aircraft.

In an embodiment of the any of the above embodiments, the mechanism further comprises a biasing element coupled to the actuation element, the biasing element being configured so as to bias the actuation element in the second direction towards the first position.

In an embodiment of any of the above embodiments, the mechanism can be adjusted by changing or adjusting the biasing element. In some embodiments changes to the biasing element may be used, in conjunction with the regulator, to control or adjust the length of time for which the valve remains open.

In an embodiment of any of the above embodiments, the biasing element is a spring. In some embodiments the biasing element is a helical compression spring.

In an embodiment of any of the above embodiments, the regulator is coupled indirectly to the actuation element.

In an alternative embodiment of any of the above embodiments, the regulator is coupled directly to the actuation element.

In an embodiment of any of the above embodiments, the regulator is coupled to the actuation element via a coupling, and the movement of the actuator in the first and second directions is linear movement.

In an embodiment of any of the above embodiments, the coupling comprises a rack and a pinion. In some embodiments the rack is integral with the actuation element, and the pinion is integral with the regulator or the pinion is coupled to the regulator. For example, via an axle on which both the pinion and regulator are fixed.

In an embodiment of any of the above embodiments, the regulator comprises a hub and one or more blades, at least one of the blades is attached to the hub, and the first and second resistances to rotation result from the configuration of at least one of the blades.

In an embodiment of any of the above embodiments, the one or more blades are in the form of to one or more fins or one or more vanes.

In an embodiment of any of the above embodiments, at least one of the blades is at least partially flexible or is fully flexible, and at least one blade is configured to elastically bend or flex in the second rotational direction when the hub is rotating in the first rotational direction.

In an embodiment of any of the above embodiments, the at least one blade is further configured not to elastically bend or flex in the first rotational direction when the hub is rotating in the second rotational direction, or not to elastically bend or flex in the first rotational direction when the hub is rotating in the second rotational direction to the same degree as they bend or flex in the second rotational direction. This has the advantage that the bent or flexed blade or blades offer less resistance to movement of the blades through the fluid in which they are immersed when the hub is rotating in the first rotational direction than it or they offer when the hub is rotating in the first rotational direction.

It is to be understood that partially flexible has the meaning in the present disclosure that part or all of the at least one blade is configured to elastically bend. For example, partial flexure could be a portion of the blade remote from the hub flexing. Fully flexible is when the whole of the blade flexes.

In an embodiment of any of the above embodiments, at least one blade is rigid when the hub is rotating in the second rotational direction.

In an alternative embodiment of any of the above embodiments all of the blades are at least partially flexible or fully flexible, and all of the blades are configured to at least partially or fully elastically bend or flex in the second rotational direction when the hub is rotating in the first rotational direction.

In an embodiment of any of the above embodiments, at least one of the blades is at least partially reversibly deformable. In such an embodiment rotation of the hub in the first rotational direction causes the at least one of the blades to deform to or retain a first configuration in which at least one of the blades generates the first degree of resistance to the rotation of the hub in the first rotational direction, and rotation of the hub in the second rotational direction causes the at least one of the blades to deform to or retain a second configuration in which the at least one of the blades generates the second degree of resistance to the rotation of the hub in the second rotational direction. In some embodiments, the at least one blade is at least partially formed from a flexible material which deforms to a shape that offers low resistance to rotation of the hub when the hub starts rotating in the first rotational direction, and which deforms to a second shape that offers a higher resistance to rotation of the hub when the hub starts rotating in the second rotational direction.

In an embodiment of any of the above embodiments, at least one blade is rigid.

In an embodiment of any of the above embodiments, at least one blade is rigid when the hub is rotating in the second rotational direction.

In an alternative embodiment of any of the above embodiments all of the blades are at least partially reversibly deformable, and all of the blades are configured to deform to or retain a first configuration in which all of the blades generate the first degree of resistance to the rotation of the hub in the first rotational direction, and rotation of the hub in the second rotational direction causes all of the blades to deform to or retain a second configuration in which all of the blades generate the second degree of resistance to the rotation of the hub in the second rotational direction.

In an embodiment of any of the above embodiments, at least one of the blades is hingedly connected to the hub by a hinge, and one or both of the hinge and the blade connected to the hinge is so configured that the blade can rotate around the hinge between a first orientation relative to the hub and a second orientation relative to the hub. The hinge is a connection between the blade and hub that allows the blade to change orientation relative to the hub and to rotate around the hinge.

In some embodiments of the above embodiment, the first orientation of the at least one blade relative to the hub is an orientation that offers a lower resistance to rotation of the hub when the hub is rotating in the first direction, and the second orientation of the at least one blade offers a higher resistance to rotation of the hub when the hub is rotating in the second direction. In such embodiments, the resistance to rotation of the at least one blade is such that when the hub is rotating in the first direction the at least one blade is impelled towards the first orientation, and when the hub is rotating in the second direction the at least one blade is impelled towards the second orientation.

In an embodiment of any of the above embodiments, at least one of the blades hingedly connected to the hub is biased towards the first orientation, rotation of the hub in the second rotation direction impels the at least one blade hingedly connected to the hub against the bias and towards the second orientation, and rotation of the hub in the first rotation directions impels the at least one blade hingedly connected to the hub with the bias and towards the first orientation.

In an embodiment of any of the above embodiments, at least one blade is rigid when the hub is rotating in the second rotational direction.

In an alternative embodiment of any of the above embodiments all of the blades are hingedly connected to the hub.

In an embodiment of the above embodiments, the first orientation is one in which a radius of the regulator is minimised, and the second orientation is one in which the radius of the regulator is maximised. The radius of the regulator is measured from the regulator axis to a radially outermost tip of at least one blade.

In an embodiment of any of the above embodiments, the mechanism comprises two or more regulators, and both regulators are coupled to the actuation element.

According to a second aspect of the present disclosure, there is provided a speed regulated bi-directional actuator comprising a speed regulation mechanism according to the first aspect of the present disclosure, and a chamber suitable for containing a liquid. At least one regulator is at least partially located in the chamber, the chamber is defined by one or more walls, and the chamber is so configured that the regulator may rotate around the regulator axis without interfering with any wall of the chamber.

In an embodiment of the above embodiment, the or each regulator includes an axle which has the regulator axis as its central axis, and the chamber includes at least one element in which an end of the axle may be located.

In an embodiment of the any of the above embodiments, the actuation element extends through the chamber.

In an embodiment of any of the above embodiments, the chamber is at least partially filled with liquid when the speed regulated bi-directional actuator is in use, and the chamber and at least one regulator is so configured that in use the at least one regulator is at least partially submerged in the liquid.

In an embodiment of any of the above embodiments, the first and second resistances to rotation of the at least one regulator are, when the speed regulated bi-directional actuator is in use, the result of the interface between the at least one regulator and the liquid within the chamber.

In an embodiment of any of the above embodiments, the liquid comprises water.

In an embodiment of any of the above embodiments, the configuration of the at least one regulator is such that the second resistance to rotation causes the actuation element to take a predetermined period of time to travel from the second position to the first position.

According to a third aspect of the present disclosure there is provided a faucet or tap comprising a valve and a speed regulation mechanism according to the first aspect of the present disclosure or a speed regulated bi-directional actuator according to the second aspect of the present disclosure. The valve has a closed configuration in which fluid is prevented from flowing through the valve and a fully open configuration in which fluid may flow through the valve. The valve is in the closed configuration when the actuation element is in the first position, and the valve is in the fully open configuration when the actuation element is in the second position.

The present disclosure will be further described and explained by way of example with reference to accompanying drawings in which
Figure 1 shows a schematic perspective view of an embodiment of a faucet / tap according to the present disclosure;
Figure 2 shows a schematic sectional view of the faucet / tap of Figure 1 along the line X-X';
Figure 3 shows a schematic side view of an embodiment of a speed regulated bi-directional actuator according to the present disclosure when the actuation element is in a first position;
Figure 4 shows a schematic front view of the speed regulated bi-directional actuator of Figure 3 when the actuation element is moving from the first position to a second position in a first direction;
Figure 5 shows a schematic side view of the speed regulated bi-directional actuator of Figure 3 when the actuation element is in the second position;
Figure 6 shows a schematic front view of the speed regulated bi-directional actuator of Figure 3 when the actuation element is moving from the second position to the first position in a second direction;
Figure 7 shows a schematic side view of a second embodiment of a speed regulated bi-directional actuator according to the present disclosure when the actuation element is in a first position;
Figure 8 shows an enlarged schematic front view of the speed regulated bi-directional actuator of Figure 7 when the actuation element is moving in a first direction;
Figure 9 shows an enlarged schematic front view of the regulator of Figure 7 when the actuation element is moving in a second direction;
Figure 10 shows a schematic side view of the speed regulated bi-directional actuator of Figure 7 when the actuation element is moving in the first direction; and
Figure 11 shows a schematic front view of the faucet of Figure 7 when the actuation element is moving in the second direction; and
Figure 12 shows a plot of the position of the actuation against time when the faucet / tap of Figure 1 or 7 is in use.

In the following discussions of the accompanying drawings, where the same element is present in a more than one embodiment the same reference numeral is used for that element throughout. Where there are similar elements similar reference numerals (the same numeral plus a multiple of 100) are used.

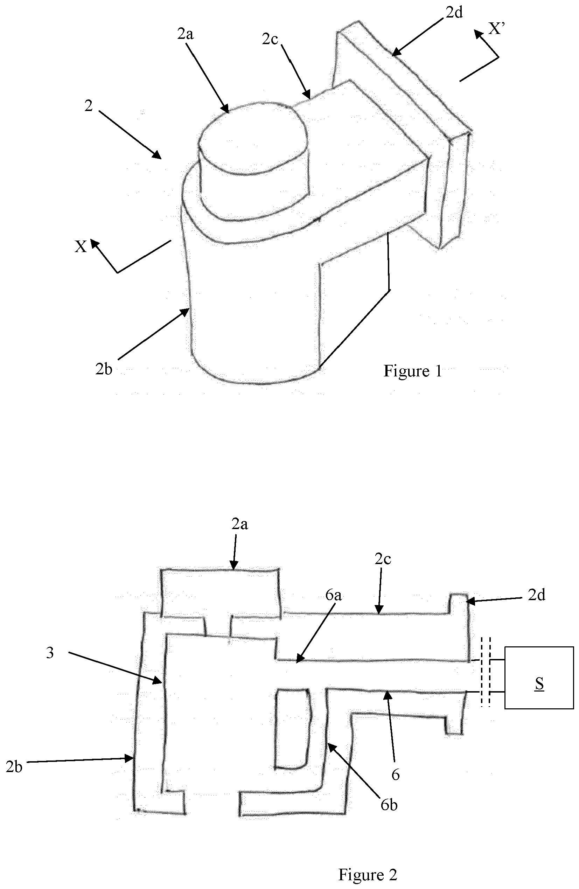

With reference to Figure 1, a faucet / tap 2 includes an actuation knob 2a which, when pushed, starts the flow of water out of the spout 2b of the faucet 2. The faucet 2 is mounted on a substantially vertical surface (not shown) via a back plate 2d. The actuation knob 2a is separated from the vertical surface by a faucet stem 2c.

With reference to Figure 2 and with continued reference to Figure 1, within the faucet 2 is a speed regulated bi-directional actuator 3 and a water supply conduit 6. In the direction of intended water flow, the water supply conduit 6 extends from a water source S and along the faucet stem 2c. The conduit 6 then splits into a first and second conduit 6a, 6b, and first and second conduits 6a, 6b are in fluid communication with the speed regulated bi-directional actuator 3.

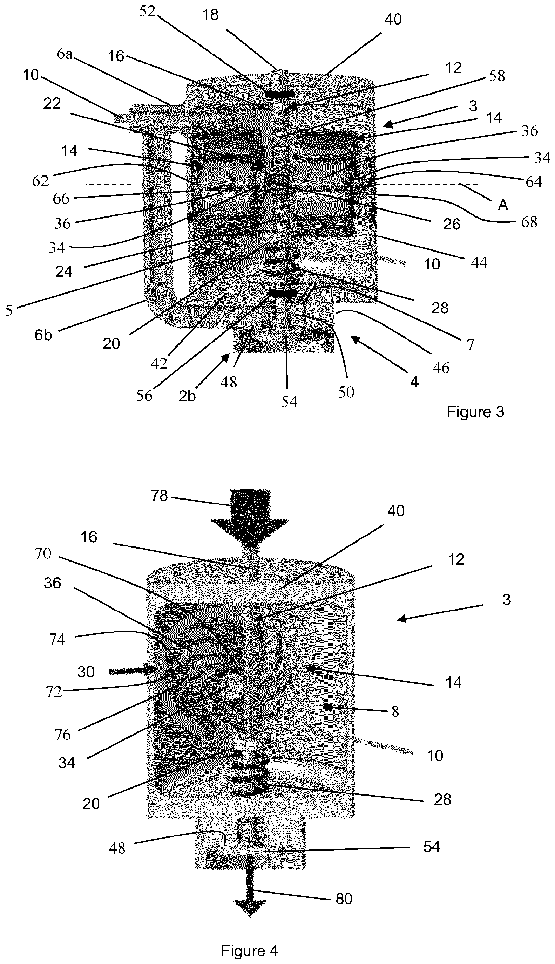

With reference to Figures 3 to 6, the speed regulated bi-directional actuator 3 includes a speed regulation mechanism 5, chamber 8, and a valve 4.

The chamber 8 is defined by a first end wall 40, a second end wall 42, and a side wall 44. In the embodiment illustrated in Figures 3 to 6 there are three walls. In other embodiments there may be more or less walls.

The side wall 44 defines an aperture (not labelled) which forms an end mouth of the first conduit 6a. This allows water 10 to flow into and fill the chamber 8.

The first end wall 40 defines an aperture (not labelled) through which an actuation element 12 (described further below) extends.

Extending from the surface of the second end wall 42 remote from the first end wall 40 is a valve body 46. The valve body 46 includes a valve seat 48 and a valve chamber 50. The valve body 46 forms the spout 2b for the faucet 2.

The second end wall 42 defines an aperture (not labelled) through which the actuation element 12 extends, and a bore 7 (shown only in Figure 3). The mouths of both of the aperture and bore 7 remote from the first end wall 40 open into the valve chamber 50. Also opening into the valve chamber 50 is a mouth at the end of the conduit 6b where that conduit is connected to the speed regulated bi-directional actuator 3.

The bore 7 extends through the second end wall 42 so that water 10 is not prevented from entering chamber 8 by any build up of trapped gas in the chamber 8. The bore 7 is of a relatively small diameter, for example 1mm, and as a result only a small flow of water can pass through bore 7.

The speed regulation mechanism 5 includes the actuator element 12 and a pair of regulators 14.

The actuator element 12 is formed from a longitudinally extending shaft 16. A portion of the shaft 16 adjacent to a first shaft end 18 extends through the aperture in the first end wall 40. A first dynamic seal 52 extends around the shaft 16 and between the shaft 16 and the first end wall 40 so as to render the aperture through the first end wall 40 watertight. The first dynamic seal is suitable for allowing motion of the shaft 16 relative to the first end wall 40 in the longitudinal directions 80, 82 of the shaft 16.

The first shaft end 18 is adapted to engage with the faucet knob 2a.

A portion of the shaft 16 adjacent to a second shaft end 54 extends through the aperture in the second end wall 42. A second dynamic seal 56 extends around the shaft 16 and between the shaft 16 and the second end wall 42 so as to render the aperture through the second end wall watertight. The second dynamic seal is suitable for allowing motion of the shaft 16 relative to the second end wall 42 in the longitudinal directions 80, 82 of the shaft 16.

The second end 54 of the shaft 16 has the form of a valve disc. The valve disc is configured to make a water tight seal with the valve seat 48 when the valve disc is impelled against the valve seat 48 when the seal element 12 is in the first position. In some alternative embodiments there is a seal element (not shown) between the second end 54 of the shaft 16 and the valve seat 48. That seal element may be supported on either of the second end 54 of the shaft 16 and the valve seat 48.

The valve 4 may be reversibly movable between a closed configuration and a fully open configuration. In the closed configuration, liquid from the conduit 6, 6a, 6b is prevented from flowing through the valve 4 and in the fully open configuration liquid from the conduit 6, 6a, 6b may flow through the valve 4.

The speed regulation mechanism 5 further includes a biasing element 28. The biasing element 28 has the form of a helical compression spring that extends around the shaft 16. The biasing element 28 extends between the second end wall 42 and a stop element 20 which is part of or attached to the shaft 16. The biasing element 28 biases the stop element 20 towards the first end wall 40, and as a result the second shaft end 54 is biased or impelledagainst the valve seat 48. In other, non-illustrated, embodiments the biasing element 28 may be any component suitable for biasing the second shaft end 54 against the valve seat 48. In such embodiments the biasing element 28 may be located in an alternative location to that shown in Figures 3 to 6 and still fall within the scope of the present disclosure.

Extending along the shaft 16 from the stop element 20 towards the first end 18 of the shaft 16 is a rack region of the shaft. In the rack region a plurality of parallel sided teeth 58 collectively form a rack gear 24.

The pair of regulators 14 are mounted on an axle 60. The axle 60 has a longitudinal axis A and first and second axle ends 62, 64. The axle ends 62, 64 are engaged with the side wall 44 via a first and second axle mount 66, 68 respectively. The first and second axle mounts 66, 68 are so configured that the axle ends 62, 64 may freely rotate around the axis A whilst engaged with the axle mounts 66, 68.

Each regulator 14 includes a hub 34 and a plurality of blades 36 (for clarity only one blade 36 is labelled on each regulator 14). The hubs 34 are fixed to the axle 60 so that rotation of the axle 60 causes rotation of the hub 34.

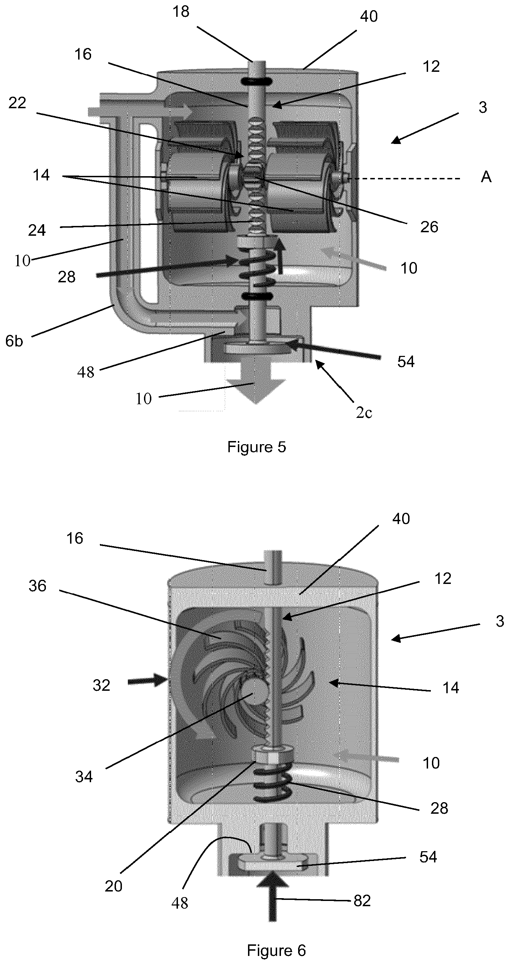

As may be best seen in Figures 4 and 6, for each regulator 14, each blade 36 is attached at an inner edge 70 to the hub 34. Each blade 36 extends outwardly from the hub 34 to an outer edge 72. The profile of a cross-section along a line extending from the inner edge 70 to the outer edge 72 is approximately arcuate with a convex surface 74 and a concave surface 76. All the blades 36 attached to the hub 34 are orientated so that all the concave surfaces 76 face in one circumferential direction around axis A, and all the convex surfaces 74 face in the other circumferential direction around axis A. The effect of the configuration of the blades 36 is that when the regulators 14, pinion gear 26 and axle 60 are rotating around axis A in a first rotational direction 30 all the convex face 74 of the blades are facing rotationally forwards, the resistance to rotation of the regulator 14 as a result of interaction between the water 10 and the blades 36 generates less resistance to rotation than when the regulators 14, pinion gear 26 and axle 60 are rotating around axis A in the second rotational direction 32. This is because the concave faces 72 of the blades are facing rotationally forwards.

In the embodiment shown in Figures 3 to 6 there are two regulators 14, in other embodiments there may be more or less regulators, each of which is coupled to the actuation element 12. The number of regulators may be selected in light of the desired speed regulation.

Also mounted on the axle 60 is a pinion gear 26. The pinion gear 26 is so configured that the pinion gear 26 may mesh with the teeth 58 of the rack gear 24. The first and second axle mounts 66, 68 and the apertures in the first and second end walls are so positioned that the pinion gear 26 meshes with the rack gear 24 and movement of the shaft 16 in the longitudinal direction of the shaft 16 causes the pinion gear 26 to rotate the axle 60. The pinion gear 26, rack gear 24, and axle 60 collectively form a coupling 22 that couples the actuation element 12 to the regulators 14.

In use, the actuation element 12 may move reversibly in between a first position (shown in Figures 3 and 4) and a second position (shown in Figures 5 and 6). Movement of the actuation element 12 is linear, and movement towards the second position is movement in a first direction 80, and movement of the actuation element 12 towards the first position is movement in a second direction 82.

When an external force 78 is applied to the first end 18 of the actuation element 12 (e.g. by a user pushing the faucet knob 2a which transfers the force to the first end 18 of the actuation element 12 in the first direction 80), the actuation element 12 moves from the first position towards the second position in the first direction 80. This causes:
(i) the second end 54 of the actuation element to move away from the valve seat 48 and as a result the valve 4 to move from a closed configuration to an open configuration;
(ii) the rack 24 to cause the pinion 26 to rotate around the axis A driving rotation of the axle 60 and thus rotation of the regulators 14 in the first rotational direction 30;
(iii) the biasing means 28 to become compressed or more compressed; and
(iv) water 10 to be able to flow along the second conduit 6b, through the valve 4 and out of the faucet spout 2b. To a lesser extent, water 10 can also flow through the bore 7 from chamber 8 into chamber 50 and out of the faucet spout 2b.

The force 78 will move the actuator element 12 until one or both of the faucet knob 2a and the actuation element 12 encounter a stop element (not shown). The stop element prevents further movement of the faucet knob 2a and the actuation element 12 in the first direction 80.

When the force 78 is removed or ceases:
(v) the biasing element 28 starts to decompress and biases the actuation element 12 to move in the second direction 82 until the second end 54 of the actuation element 12 approaches and then abuts the valve seat 48;
(vi) the rack 24 causes the pinion 26 to rotate around the axis A driving rotation of the axle 60 and thus rotation of the regulators 14 in the second rotational direction 32; and
(vii) the flow of water 10 through valve 4 decreases and subsequently stops as the second end 54 of the actuation element 12 approaches and then abuts the valve seat 48.

When the regulators 14 are rotating in the second rotational direction 32 the resistance to rotation caused by the blades 36 results in the actuation element 12 taking a period of time TR to return to the first position.

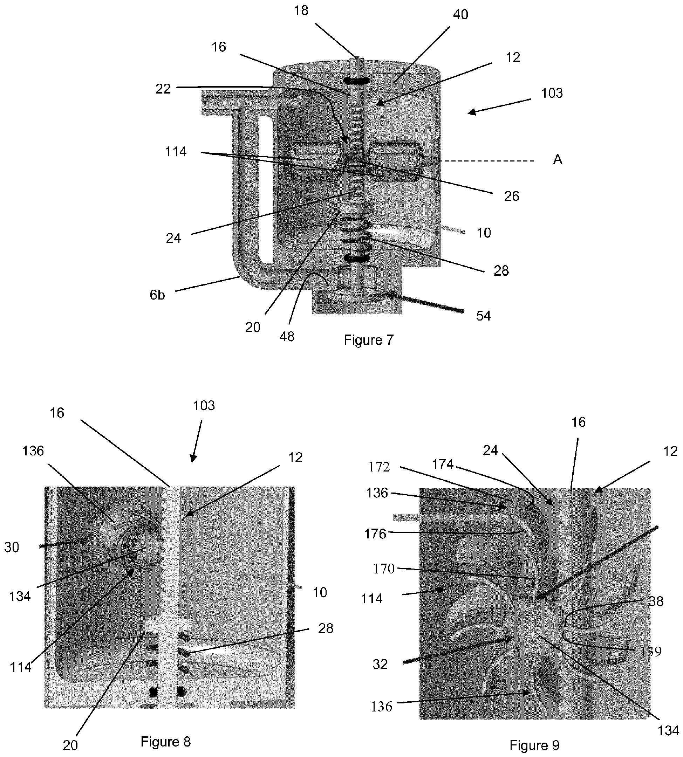

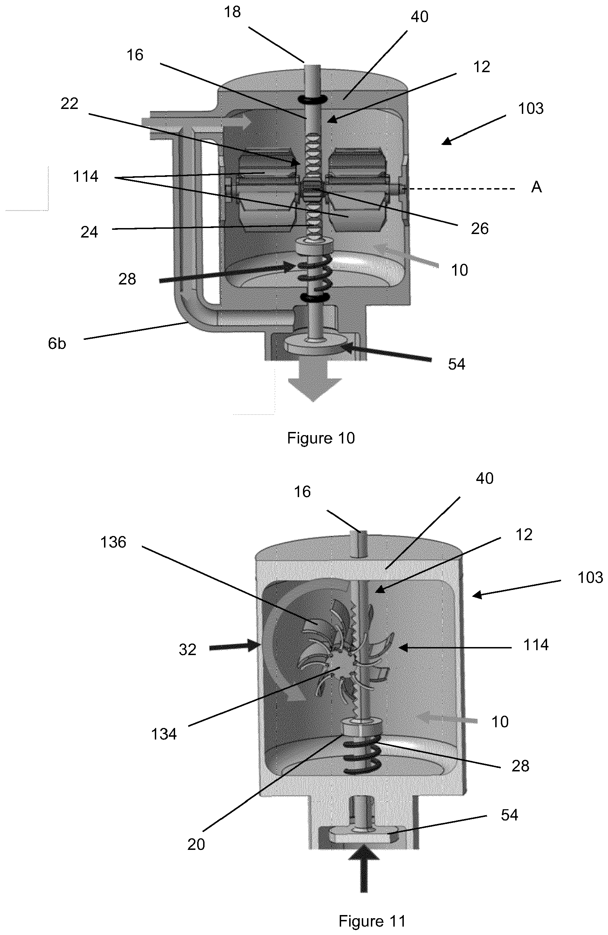

With reference to Figures 7 to 11, the speed regulated bi-directional actuator 103 has the same structure and method of operation as the speed regulated bi-directional actuator 3 of Figures 3 to 6 other than the structure of the regulators 114.

Each regulator 114 has a plurality of blades 136. Each blade 136 is attached at an inner edge 170 to the hub 134 via a hinge 138. Each blade 136 extends outwardly from the hub 134 to an outer edge 172. The hub 134 is configured so that the blades 136 can rotate around the hinge 138 between a first orientation (shown in Figure 8) where the regulator 114 experiences a minimum resistance to rotation because the blades 136 are the most hydrodynamic, and a second orientation (shown in Figure 9) in which the blades 136 are the least hydrodynamic. The blades 136 are prevented from rotating any further away from the first orientation than the second orientation by a stop 139. The hinge 138 may include a biasing element (not shown) that biases the blades 136 into the second position. That biasing element has the form of a coil spring.

The profile of a cross-section of the blade 136 along a line extending from the inner edge 170 to the outer edge 172 is approximately arcuate with a convex surface 174 and a concave surface 176. All the blades 136 attached to the hub 134 are orientated so that all the concave surfaces 176 face in one circumferential direction around axis A, and all the convex surfaces 174 face in the other circumferential direction around axis A. The effect of the configuration of the blades 136 is that when the regulators 114, pinion gear 26 and axle 60 are rotating around axis A in a first rotational direction 30 in which the convex face 174 of the blades are facing rotationally forwards the resistance to rotation of the regulator 114 as a result of interaction between the water 10 and blades 136 is less than when the regulators 114, pinion gear 26 and axle 60 are rotating around axis A in a second rotational direction 32 because the concave faces 172 of the blades are facing rotationally forwards in direction 32.

In the embodiment shown in Figures 7 to 11 there are two regulators 114, in other embodiments there may be more or less regulators, each of which is coupled to the actuation element 12. The number of regulators may be selected in light of the desired speed regulation.

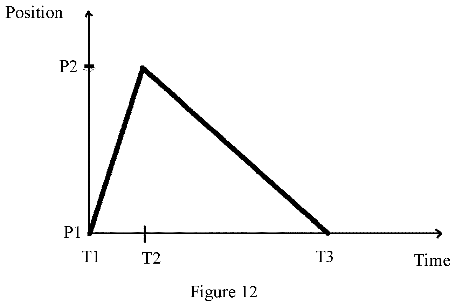

With reference to Figure 12, a plot of the position of the actuator element 12 of Figures 3 to 6 and of Figures 7 to 11 against time is shown. When the actuation element is in the first position P1, the force 78 is applied to the faucet knob 2a / actuator element 12 at time T1. The force 78 continues to be applied to the faucet knob 2a and the actuation element 12 until time T2 when the faucet knob 2a and / or actuation element 12 encounters the stop and is at position P2. The force 78 then ceases and the actuation element 12 returns to the first position P1 under the influence of the biasing element 28 at time T3. The period of time TR for the actuation element 12 to return to first position P1 from the second position P2 is the difference between T2 and T3.

The above description is meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

Various aspects of the speed regulation mechanism and the parts thereof disclosed in the various embodiments may be used alone, in combination, or in a variety of arrangements not specifically discussed in the embodiments described above. This disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this disclosure in its broader aspects. The scope of the following claims should not be limited by the embodiments set forth in the examples, but should be given the broadest reasonable interpretation consistent with the description as a whole.

## Claims

1. A speed regulation mechanism (5) suitable for use with a bi-directional actuator (3), the mechanism (5) comprising an actuation element (12) and a regulator (14) in which:
the actuation element (12) is configured to reversibly move between a first position and a second position;
the regulator (14) is configured to rotate around a regulator axis (A);
the actuation element (12) is coupled to the regulator (14);
movement of the actuation element (12) in a first direction towards the second position causes rotation of the regulator (14) around the regulator axis (A) in a first rotational direction (30);
movement of the actuation element (12) in a second direction towards the first position causes rotation of the regulator (14) around the regulator axis (A) in a second rotational direction (32);
the regulator (14) is so configured that the regulator (14) has a first resistance to rotation when rotating in the first rotational direction (30) and a second resistance to rotation when rotating in the second rotational direction (32); and
the second resistance to rotation is greater than the first resistance to rotation.

2. The mechanism (5) of claim 1, further comprising a biasing element (28) coupled to the actuation element (12), the biasing element (28) being configured so as to bias the actuation element (12) in the second direction towards the first position.

3. The mechanism (5) of claim 1 or 2, wherein the regulator (14) is coupled to the actuation element (12) via a coupling (22), and the movement of the actuation element (12) in the first and second directions is linear movement.

4. The mechanism (5) of claim 3, wherein the coupling (22) comprises a rack (24) and a pinion (26).

5. The mechanism (5) of any preceding claim, wherein the regulator (14) comprises a hub (34) and one or more blades (36), at least one of the blades (36) is attached to the hub (34), and the first and second resistances to rotation result from the configuration of at least one of the blades (36).

6. The mechanism (5) of claim 5, wherein at least one of the blades (36) is at least partially flexible or semi-flexible, and at least one blade (36) is configured to elastically bend in the second rotational direction (32) when the hub (34) is rotating in the first rotational direction (30).

7. The mechanism (5) of claim 5 or 6, wherein at least one of the blades (36) is at least partially reversibly deformable, and rotation of the hub (34) in the first rotational direction (30) causes at least one of the blades (36) to deform to or retain a first configuration where at least one of the blades (36) generates the first degree of resistance to the rotation of the hub (34) in the first rotational direction (30), and
rotation of the hub (34) in the second rotational direction (32) causes the at least one of the blades (36) to deform to or retain a second configuration where at least one of the blades (36) generates the second degree of resistance to the rotation of the hub (34) in the second rotational direction (32).

8. The mechanism (5) of any of claims 5 to 7, wherein at least one of the blades (36) is hingedly connected to the hub (34) by a hinge (38), and one or both of the hinge (38) and the blade (36) connected to the hinge (38) is so configured that the blade (36) can rotate around the hinge (38) between a first orientation relative to the hub (34) and a second orientation relative to the hub (34).

9. The mechanism (5) of claim 8 wherein at least one of the blades (36) hingedly connected to the hub (34) is biased towards the first orientation, rotation of the hub (34) in one of the first and second rotation directions (30, 32) impels the at least one blade (36) hingedly connected to the hub (34) against the bias and towards the second orientation, and rotation of the hub (34) in the other of the first and second rotation directions (30, 32) impels the at least one blade (36) hingedly connected to the hub (34) with the bias and towards the first orientation.

10. The mechanism (5) of any preceding claim, in which the mechanism (5) comprises two or more regulators (14), and all the regulators (14) are coupled to the actuation element (12).

11. A speed regulated bi-directional actuator (3) comprising a speed regulation mechanism (5) of any of claims 1 to 10, and a chamber suitable for containing a liquid (10), wherein at least one regulator (14) is at least partially located in the chamber, the chamber is defined by one or more walls (40, 42, 44); and the chamber is so configured that the regulator (14) may rotate around the regulator axis (A) without interfering with any wall (40, 42, 44) of the chamber.

12. A speed regulated bi-directional actuator (3) of claim 11 wherein the chamber is at least partially filled with liquid (10) when the speed regulated bi-directional actuator (3) is in use, and the chamber and at least one regulator (14) are so configured that in use the at least one regulator (14) is fully submerged in the liquid (10).

13. A speed regulated bi-directional actuator (3) of claim 11 or 12 in which the first and second resistances to rotation of the at least one regulator (14) are, when the speed regulated bi-directional actuator (3) is in use, the result of interference between the at least one regulator (14) and the liquid (10) within the chamber.

14. A speed regulated bi-directional actuator (3) of any of claims 11 to 13 in which the configuration of the at least one regulator (14) is such that the second resistance to rotation causes the actuation element (12) to take a predetermined length of time to travel from the second position to the first position.

15. A faucet (2) comprising:
a valve (4) and a mechanism (5) of any of claims 1 to 10 or a speed regulated bi-directional actuator (3) of claims 11 to 14;
the valve (4) has a closed configuration in which fluid (10) is prevented from flowing through the valve (4) and a fully open configuration in which fluid (10) may flow through the valve (4); and
the valve (4) is in the closed configuration when the actuation element (12) is in the first position, and the valve (4) is in the fully open configuration when the actuation element (12) is in the second position.
